# EUROPEAN PATENT SPECIFICATION

(11) **EP 3 842 344 B1**
(45) Date of publication and mention of the grant of the patent: **03.05.2023**
(21) Application number: 20216006.5
(22) Date of filing: 21.12.2020
(51) Int. Cl.: B64D 37/32

(54) **AIRCRAFT**
LUFTFAHRZEUG
AÉRONEF

(30) Priority: 24.12.2019 US 201916726335
(43) Date of publication of application: 30.06.2021
(73) Proprietor: Hamilton Sundstrand Corporation, Charlotte, NC 28217-4578 (US)
(72) Inventor: HO, Tony, Glastonbury, CT 06033 (US); BRUNO, Louis J., Ellington, CT 06029 (US); COUTIN, Aiden, Windsor, CT 06095 (US)
(74) Representative: Dehns

(56) References cited:
- EP-A1- 3 103 719
- EP-A1- 3 241 757
- WO-A2-2017/064209

## Description

### BACKGROUND OF THE INVENTION

This invention generally relates to the aircraft on-board systems, and more particularly, to a temperature control system for on-board fuel tank inerting systems. Temperature control systems are disclosed in EP 3103719, EP 3241757 and WO 2017/064209.

Fuel tank inerting systems are used to introduce an inert gas, such as nitrogen, into the fuel tanks of a vehicle, such as an aircraft. The inert gas displaces potentially dangerous fuel and air mixtures, thereby reducing the risk of explosion or fire. Typically, on-board fuel inerting systems process air from an air source, such as bleed air taken from the engines of an aircraft. The bleed air is provided to a hollow fiber membrane where it is separated into nitrogen and oxygen. The separating efficiency of the membrane is directly dependent on the temperature of the air. However, there is a maximum allowable temperature of the bleed air to maintain the safety of the components downstream of the bleed air, such as filter, valves, and sensors, as well as safety relative to the fuel tank. Bleed air leaving the engines is extremely hot and therefore must be cooled before being processed. However, existing systems for cooling the bleed air to a safe temperature for inerting requires some consumption of the aircraft's limited heat sink and leaving the environmental control system of the aircraft with less heat sink and thereby causing a negative impact on its performance.

### BRIEF DESCRIPTION OF THE INVENTION

According to one embodiment, an aircraft is provided as defined by claim 1.

In addition to one or more of the features described above, or as an alternative, in further embodiments a configuration of the fuel tank inerting heat exchanger is selected to achieve a desired temperature of the first air flow associated with operation of the at least one air separating module.

In addition to one or more of the features described above, or as an alternative, in further embodiments the desired temperature of the first air flow is between about 150°F (65.6°C) and about 250°F (121.1°C).

In addition to one or more of the features described above, or as an alternative, in further embodiments the fuel tank inerting heat exchanger is located remotely from a ram air circuit.

In addition to one or more of the features described above, or as an alternative, in further embodiments the fuel tank inerting heat exchanger is operably coupled with a cabin pressure control system.

In addition to one or more of the features described above, or as an alternative, in further embodiments the cabin pressure control system includes: a conduit for receiving the cabin outflow air from a cabin; and an outflow valve movable to control a flow of the cabin outflow air exhausted from the conduit.

In addition to one or more of the features described above, or as an alternative, in further embodiments the fuel tank inerting heat exchanger is located between the cabin and the outflow valve.

In addition to one or more of the features described above, or as an alternative, in further embodiments the second air flow output from the fuel tank inerting heat exchanger is exhausted overboard.

In addition to one or more of the features described above, or as an alternative, in further embodiments the fuel tank inerting heat exchanger is arranged between a cabin and the air conditioning system relative to the cooling air flow.

In addition to one or more of the features described above, or as an alternative, in further embodiments the air conditioning system includes an air cycle machine and the second air flow output from the fuel tank inerting heat exchanger is provided to the air cycle machine.

In addition to one or more of the features described above, or as an alternative, in further embodiments energy is extracted from the second air flow provided to the air cycle machine.

In addition to one or more of the features described above, or as an alternative, in further embodiments the air cycle machine further comprises a turbine and the cooling air flow is provided to the turbine.

In addition to one or more of the features described above, or as an alternative, in further embodiments the first flow is bleed air drawn from at least one of an engine and an auxiliary power unit.

According to another embodiment, a method of inerting a gas tank of an aircraft is provided as defined by claim 10.

In addition to one or more of the features described above, or as an alternative, in further embodiments the temperature of the first air flow output from the fuel tank inerting heat exchanger is between about 150°F (65.6°C) and about 250°F (121.1°C).

In addition to one or more of the features described above, or as an alternative, in further embodiments comprising extracting energy from the second air flow output from the fuel tank inerting heat exchanger.

In addition to one or more of the features described above, or as an alternative, in further embodiments the energy is extracted from the second air flow at an air cycle machine of an air conditioning system.

In addition to one or more of the features described above, or as an alternative, in further embodiments the first air flow is s bleed air drawn from at least one of an engine and an auxiliary power unit.

### BRIEF DESCRIPTION OF THE DRAWINGS

The subject matter, which is regarded as the invention, is particularly pointed out and distinctly claimed in the claims at the conclusion of the specification. The foregoing and other features, and advantages of the invention are apparent from the following detailed description taken in conjunction with the accompanying drawings in which:
FIG. 1 is a schematic diagram of a portion of a fuel tank inerting system;
FIG. 2 is a schematic diagram of an existing fluid flow path for the air to be provided to the fuel tank inerting system;
FIG. 3 is a schematic diagram of a fluid flow path of the air to be provided to the fuel tank inerting system according to an embodiment; and
FIG. 4 is a schematic diagram of a fluid flow path of the air to be provided to the fuel tank inerting system according to another embodiment.

### DETAILED DESCRIPTION OF THE INVENTION

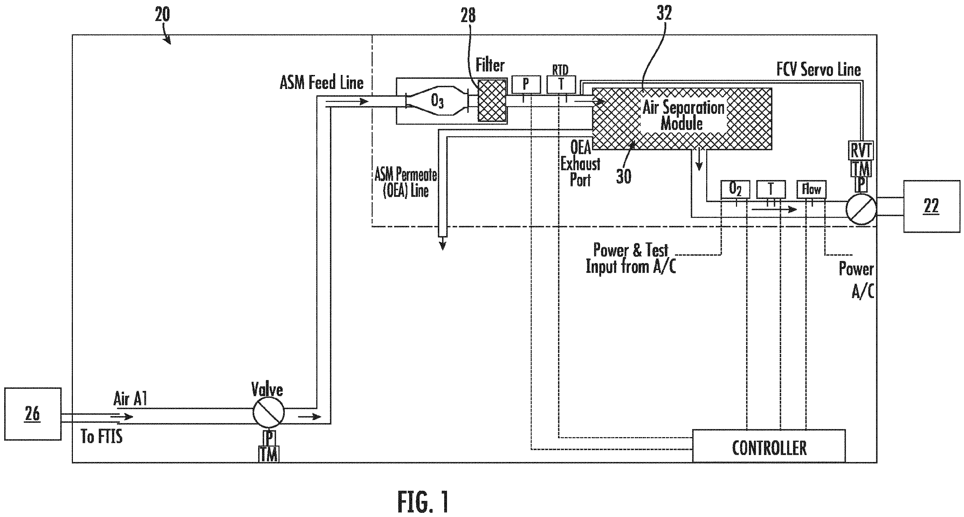

Referring now to FIG. 1, an example of a basic fuel tank inerting system (FTIS) 20 for controlling a supply of inerting gas to a fuel tank 22, such as commonly used in an aircraft for example, is illustrated. The FTIS 20 uses an on-board supply of air A1 to generate the inerting gas. In the illustrated, non-limiting embodiment, the air flow A1 provided to the FTIS 20 is bled from one or more engines or auxiliary power units 26 of an aircraft. Accordingly, the air flow A1 is a hot, high pressure bleed air. However, it should be understood that other suitable mediums, such as outside air, or air discharged from another system of the aircraft are also within the scope of the disclosure. The air A1 flows through a filter 28 before being provided to one or more air separating modules (ASM) 30. The ASMs 30 typically include a permeable membrane 32 having two sides. The oxygen rich bleed air passes across a first side of the membrane 32 and a secondary fluid flow passes over a second, opposite side of the membrane 32 to create a pressure differential across the membrane 32. The pressure differential causes oxygen to diffuse from the bleed air to the secondary fluid stream, and a magnitude of the pressure differential may therefore be used to control how much oxygen is diffused from the stream of bleed air. The secondary fluid flow may be provided from any suitable system having a low pressure airflow. Further, what remains of the treated bleed air to be provided to fuel tank 22 is an inert gas, nitrogen.

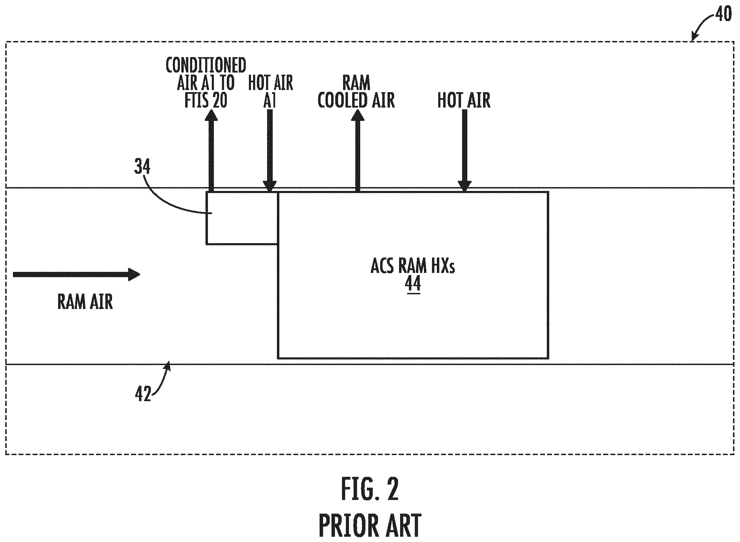

To maintain safety and a desired level of efficiency of the membrane 32 of the ASM 30 by controlling the temperature thereof, the air A1 provided to the FTIS 20 is cooled prior to passing through the ASM 30. In an embodiment the air provided to the membrane 32 is between about 150°F (65.6°C) and about 250°F (121.1°C), and more specifically between about 150°F (65.6°C) and about 215°F (101,7°C). In existing systems, best shown in FIG. 2, air flow A1, for example drawn from a bleed air system is cooled by a cooling air flow having a temperature less than the temperature of the air flow A1 to achieve a desired temperature. In an example, the air A1 is provided to a fuel tank inerting heat exchanger 34 located within a ram air circuit 42 of an air conditioning system (ACS) 40 of an aircraft environmental control system. To achieve the necessary cooling of the air A1, the fuel tank inerting heat exchanger 34 is arranged upstream from the one or more ram heat exchangers 44 relative to a flow of ram air.

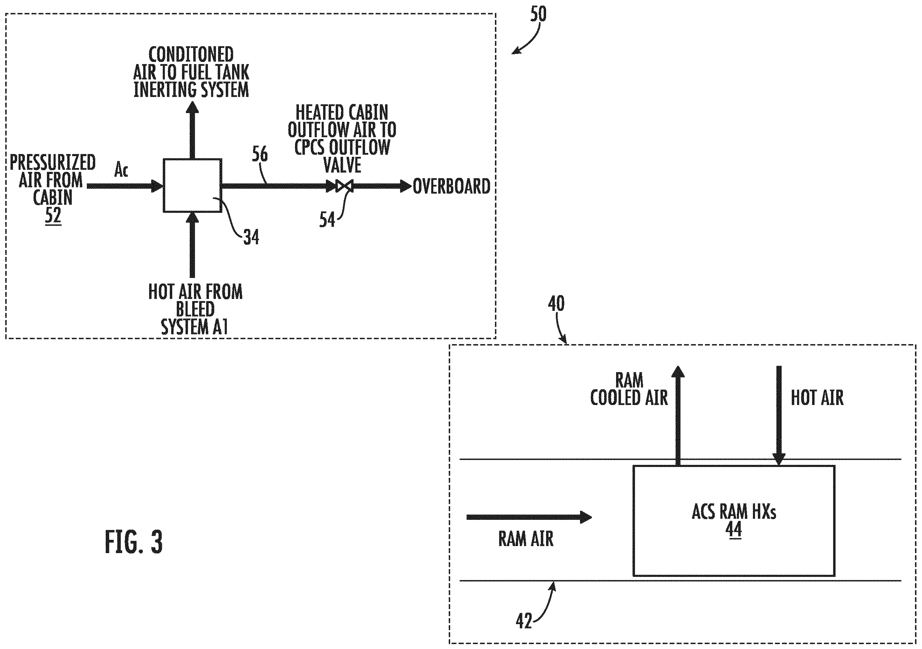

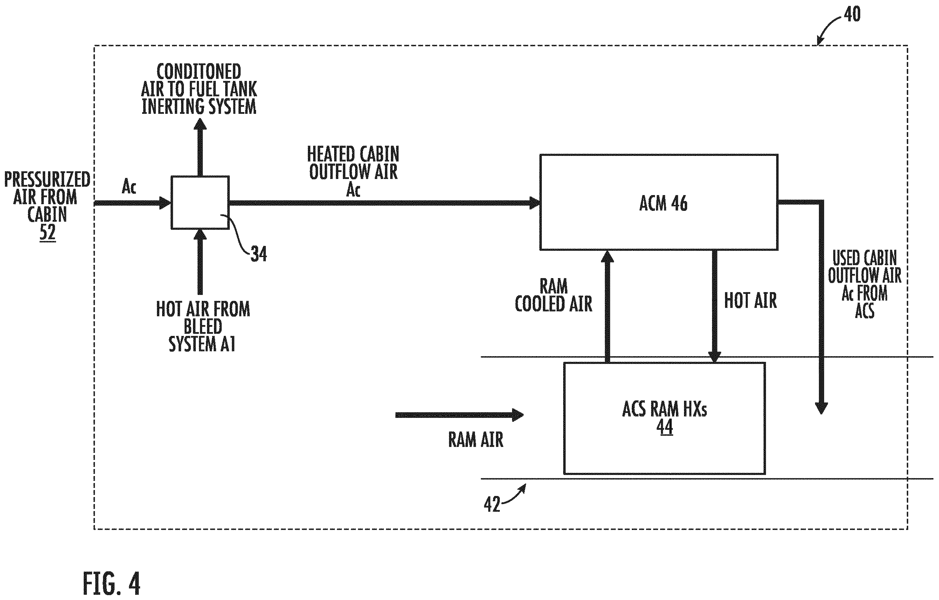

Inclusion of the fuel tank inerting heat exchanger 34 within the ram air circuit 42 reduces the overall cooling capacity of the ACS 40 because the temperature of the ram air provided to the ram heat exchangers 44 is increased via the heat transfer with the air A1 thus reducing overall ACS heat sink. Accordingly, other sources of a cooling air flow within the aircraft may be used to cool the temperature of the air A1 to be provided to the ASM 30. In an embodiment, the air A1 is cooled through a heat exchanger located outside of the ram air circuit 42 and where the cool fluid source is a media other than ram air (see FIGS. 3 and 4)

Existing aircraft include not only the ACS 40, but also a separate cabin pressure control system (CPCS) 50 operable to maintain the pressure within the cabin 52 of the aircraft. As best shown in FIG. 3, the CPCS 50 is a separate subsystem apart from the ACS 40; though they both belong as part of the aircraft ECS. The CPCS 50 includes an outflow valve 54 arranged in fluid communication with the cabin 52 via a conduit 56. The valve is transformable between a closed position and an open position to exhaust pressurized air from the cabin, such as to overboard or outside of the aircraft.

In an embodiment, illustrated in FIG. 3, the fuel tank inerting system may be integrated with the CPCS 50 of the aircraft via a fuel tank inerting heat exchanger 34. As shown, the fuel tank inerting heat exchanger 34 is arranged at an intermediate location between the cabin 52 and the outflow valve 54. Within the fuel tank inerting heat exchanger 34, heat is configured to transfer from the air A1 to be provided to the ASM 30 to the pressurized air from the cabin, also referred to herein as cabin outflow air or cabin discharge air Ac. The fuel tank inerting heat exchanger 34 may be configured such that either of the fluid flows A1, Ac may make one or more passes there through to achieve a desired level of cooling. The cooled air A1 output from fuel tank inerting heat exchanger 34 may be at a desired temperature selected for operation of the ASM 30, and the heated cabin outflow air Ac output from the fuel tank inerting heat exchanger 34 may be exhausted overboard, or alternatively, provided to another system within the aircraft, such as a portion of the ACS 40 for example. By heating the outflow air Ac prior to overboarding it through the outflow valve, a higher temperature in the outflow valve and thus a higher sonic speed may be achieved, resulting in more thrust recovery from the outflow.

With reference now to FIG. 4, in another embodiment, the functionality of the CPCS has been integrated into the ACS 40. More specifically, in such embodiments, the ACS 40 is configured to monitor the pressure within the cabin 52, and control the amount of cabin outflow air Ac provided to the ACS 40 to meet the pressure demands of the cabin 52, for example to maintain a minimum pressure within the cabin 52. In such embodiments, the CPCS 50 separate from the ACS 40 (as shown in FIG. 3) has been eliminated. Various examples of an environmental control system where the functionality of the CPCS is integrated into the ACS are described in more detail in U.S. Patent Application Serial No. 15/545,686 filed on August 20, 2019.

With continued reference to FIG. 4, the integration of the fuel tank inerting heat exchanger 34 is similar to that of FIG. 3. As shown, at least a portion of cabin outflow air Ac is provided from the cabin 52 to one or more components of the downstream ACS 40. The fuel tank inerting heat exchanger 34 is positioned at some intermediate location between the cabin 52 and a downstream component of the ACS 40, such as portion of an air cycle machine 46 for example. Within the fuel tank inerting heat exchanger 34, heat is configured to transfer from the hot, high pressure air A1 to be provided to the ASM 30 to the pressurized air Ac discharged from the cabin 52. As previously noted, the fuel tank inerting heat exchanger 34 may be configured such that either of the fluid flows A1, Ac may make one or more passes there through to achieve a desired level of cooling. The cooled flow of air A1 output from fuel tank inerting heat exchanger 34 may be at a desired temperature selected for operation of the ASM 30, and the flow of heated cabin outflow air Ac output from the fuel tank inerting heat exchanger 34 is provided to one or more components of the ACS 40. In an embodiment, the heated cabin outflow air Ac is provided to a turbine of an air cycle machine 46 of the ACS 40 for example. After energy is extracted from the cabin outflow air Ac by the turbine, the cabin outflow air Ac may be exhausted overboard or into the ram air circuit 42 upstream or downstream from the ram heat exchangers 44. Alternatively, the cabin outflow air Ac may be provided to another component within the ACS 40 or to another system within the aircraft. By heating the air Ac provided to the turbine of the ACM 46, additional power or energy may be extracted therefrom.

The FTIS 20 described herein is configured to operate at a temperature to optimize efficiency of the ASM membrane 32 while maintaining a desired level of safety at the fuel tank 22. The cooling air source disclosed herein may be used to achieve the desired temperature with minimal impact to the ACS 40 of an aircraft. Accordingly, the FTIS 20 may be used in both new and retrofit applications.

While the invention has been described in detail in connection with only a limited number of embodiments, it should be readily understood that the invention is not limited to such disclosed embodiments. Rather, the invention can be modified to incorporate any number of variations, alterations, or substitutions that are within the scope of the claims. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. An aircraft comprising an air conditioning system (40) and a fuel tank inerting system (20), the fuel tank inerting system comprising:
a first air flow (A1) provided from a first source having a first temperature;
a second air flow (Ac) including cabin outflow air having a second temperature, the first temperature being greater than the second temperature;
a fuel tank inerting heat exchanger (34) arranged in fluid communication with both the first air flow and the second air flow and configured to transfer heat from the first air flow to the second air flow; and
at least one air separating module (30) configured to separate an inert gas from the first air flow output from the fuel tank inerting heat exchanger; wherein
the fuel tank inerting heat exchanger is operably coupled with the air conditioning system (40), **characterised in that** the first air flow is not conditioned by the air conditioning system before reaching the fuel tank inerting heat exchanger.

2. Aircraft according to claim 1, wherein a configuration of the fuel tank inerting heat exchanger is selected to achieve a desired temperature of the first air flow associated with operation of the at least one air separating module.

3. Aircraft according to claim 2, wherein the desired temperature of the first air flow is between about 150°F (65.6°C) and about 250°F (121.1°C).

4. Aircraft according to any preceding claim, wherein the fuel tank inerting heat exchanger is located remotely from a ram air circuit, and/or wherein the fuel tank inerting heat exchanger is operably coupled with a cabin pressure control system, and optionally wherein the cabin pressure control system includes:
a conduit (56) for receiving the cabin outflow air from a cabin (52); and
an outflow valve (54) movable to control a flow of the cabin outflow air exhausted from the conduit, and wherein the fuel tank inerting heat exchanger is located between the cabin and the outflow valve.

5. Aircraft according to any preceding claim, wherein the second air flow output from the fuel tank inerting heat exchanger is exhausted overboard.

6. Aircraft according to any preceding claim, wherein the fuel tank inerting heat exchanger is arranged between a cabin and the air conditioning system (40) relative to the cooling air flow, and optionally wherein the air conditioning system includes an air cycle machine and the second air flow output from the fuel tank inerting heat exchanger is provided to the air cycle machine.

7. Aircraft according to claim 6, wherein energy is extracted from the second air flow provided to the air cycle machine.

8. Aircraft according to claim 6 or 7, wherein the air cycle machine further comprises a turbine and the cooling air flow is provided to the turbine.

9. Aircraft according to any preceding claim, wherein the first flow is bleed air drawn from at least one of an engine and an auxiliary power unit (26).

10. A method of inerting a gas tank of an aircraft comprising:
providing a first air flow having a first temperature to a fuel tank inerting heat exchanger operably coupled with an air conditioning system, the first air flow not having been conditioned by the air conditioning system;
providing a second air flow including cabin outflow air having a second temperature to the fuel tank inerting heat exchanger, the first temperature being greater than the second temperature;
transferring heat from the first air flow to the second air flow within the fuel tank inerting heat exchanger; and
separating in an air separation module an inert gas from the first air flow output from the fuel tank inerting heat exchanger.

11. The method of claim 10, wherein the temperature of the first air flow output from the fuel tank inerting heat exchanger is between about 150°F (65.6°C) and about 250°F (121.1°C).

12. The method of claim 10 or 11, further comprising extracting energy from the second air flow output from the fuel tank inerting heat exchanger.

13. The method of claim 12, wherein the energy is extracted from the second air flow at an air cycle machine of an air conditioning system.

14. The method of any of claims 10 to 13, wherein the first air flow is bleed air drawn from at least one of an engine and an auxiliary power unit.

## Patentansprüche

1. Luftfahrzeug, umfassend ein Klimaanlagensystem (40) und ein Kraftstofftankinertisierungssystem (20), wobei das Kraftstofftankinertisierungssystem Folgendes umfasst:
einen ersten Luftstrom (A1), der von einer ersten Quelle mit einer ersten Temperatur bereitgestellt wird;
einen zweiten Luftstrom (Ac), der Kabinenabluft mit einer zweiten Temperatur beinhaltet, wobei die erste Temperatur größer als die zweite Temperatur ist;
einen Kraftstofftankinertisierungswärmetauscher (34), der in Fluidverbindung sowohl mit dem ersten Luftstrom als auch mit dem zweiten Luftstrom angeordnet ist und dazu konfiguriert ist, Wärme von dem ersten Luftstrom auf den zweiten Luftstrom zu übertragen; und
mindestens ein Lufttrennmodul (30), das dazu konfiguriert ist, ein Inertgas von dem ersten Luftstrom, der von dem Kraftstofftankinertisierungswärmetauscher abgegeben wird, zu trennen;
wobei
der Kraftstofftankinertisierungswärmetauscher mit dem Klimaanlagensystem (40) wirkgekoppelt ist, **dadurch gekennzeichnet, dass** der erste Luftstrom nicht durch das Klimaanlagensystem konditioniert wird, bevor er den Kraftstofftankinertisierungswärmetauscher erreicht.

2. Luftfahrzeug nach Anspruch 1, wobei eine Konfiguration des Kraftstofftankinertisierungswärmetauschers ausgewählt ist, um eine gewünschte Temperatur des ersten Luftstroms zu erreichen, der dem Betrieb des mindestens einen Lufttrennmoduls zugeordnet ist.

3. Luftfahrzeug nach Anspruch 2, wobei die gewünschte Temperatur des ersten Luftstroms zwischen etwa 150 °F (65,6 °C) und etwa 250 °F (121,1 °C) liegt.

4. Luftfahrzeug nach einem der vorhergehenden Ansprüche, wobei sich der Kraftstofftankinertisierungswärmetauscher entfernt von einem Stauluftkreislauf befindet und/oder wobei der Kraftstofftankinertisierungswärmetauscher mit einem Kabinendruckregelsystem wirkgekoppelt ist, und wobei das Kabinendruckregelsystem optional Folgendes beinhaltet:
eine Leitung (56) zum Aufnehmen der Kabinenabluft aus einer Kabine (52); und
ein Abluftventil (54), das bewegbar ist, um einen Kabinenabluftstrom zu regeln, der aus der Leitung ausgestoßen wird, und wobei sich der Kraftstofftankinertisierungswärmetauscher zwischen der Kabine und dem Abluftventil befindet.

5. Luftfahrzeug nach einem der vorhergehenden Ansprüche, wobei der zweite Luftstrom, der von dem Kraftstofftankinertisierungswärmetauscher abgegeben wird, über Bord ausgestoßen wird.

6. Luftfahrzeug nach einem der vorhergehenden Ansprüche, wobei der Kraftstofftankinertisierungswärmetauscher zwischen einer Kabine und dem Klimaanlagensystem (40) relativ zu dem Kühlluftstrom angeordnet ist, und wobei optional das Klimaanlagensystem eine Kühlturbine beinhaltet und der zweite Luftstrom, der von dem Kraftstofftankinertisierungswärmetauscher abgegeben wird, der Kühlturbine bereitgestellt wird.

7. Luftfahrzeug nach Anspruch 6, wobei dem zweiten Luftstrom, der der Kühlturbine bereitgestellt wird, Energie entzogen wird.

8. Luftfahrzeug nach Anspruch 6 oder 7, wobei die Kühlturbine ferner eine Turbine umfasst und der Kühlluftstrom der Turbine bereitgestellt wird.

9. Luftfahrzeug nach einem der vorhergehenden Ansprüche, wobei die erste Strömung Zapfluft ist, die von mindestens einem von einem Triebwerk und einer Hilfstriebwerkseinheit (26) angesaugt wird.

10. Verfahren zum Inertisieren eines Gastanks eines Luftfahrzeugs, umfassend:
Bereitstellen eines ersten Luftstroms mit einer ersten Temperatur zu einem Kraftstofftankinertisierungswärmetauscher,
der mit einem Klimaanlagensystem wirkgekoppelt ist, wobei der erste Luftstrom nicht durch das Klimaanlagensystem konditioniert worden ist;
Bereitstellen eines zweiten Luftstroms, der Kabinenabluft mit einer zweiten Temperatur beinhaltet, zu dem Kraftstofftankinertisierungswärmetauscher, wobei die erste Temperatur größer als die zweite Temperatur ist;
Übertragen von Wärme von dem ersten Luftstrom zu dem zweiten Luftstrom innerhalb des Kraftstofftankinertisierungswärmetauschers; und
Trennen eines Inertgases von dem ersten Luftstrom, der von dem Kraftstofftankinertisierungswärmetauscher abgegeben wird, in einem Lufttrennmodul.

11. Verfahren nach Anspruch 10, wobei die Temperatur des ersten Luftstroms, der von dem Kraftstofftankinertisierungswärmetauscher abgegeben wird, zwischen etwa 150 °F (65,6 °C) und etwa 250 °F (121,1 °C) liegt.

12. Verfahren nach Anspruch 10 oder 11, ferner umfassend Extrahieren von Energie aus dem zweiten Luftstrom, der von dem Kraftstofftankinertisierungswärmetauscher abgegeben wird.

13. Verfahren nach Anspruch 12, wobei die Energie aus dem zweiten Luftstrom an einer Kühlturbine eines Klimaanlagensystems extrahiert wird.

14. Verfahren nach einem der Ansprüche 10 bis 13, wobei der erste Luftstrom Zapfluft ist, die von mindestens einem von einem Triebwerk und einem Hilfstriebwerk angesaugt wird.

## Revendications

1. Aéronef comprenant un système de climatisation (40) et un système d'inertage de réservoir de carburant (20), le système d'inertage de réservoir de carburant comprenant :
un premier flux d'air (A1) fourni à partir d'une première source ayant une première température ;
un second flux d'air (Ac) comprenant de l'air de décharge de cabine ayant une seconde température, la première température étant supérieure à la seconde température ;
un échangeur de chaleur d'inertage de réservoir de carburant (34) agencé en communication fluidique avec à la fois le premier flux d'air et le second flux d'air et configuré pour transférer de la chaleur du premier flux d'air au second flux d'air ; et
au moins un module de séparation d'air (30) configuré pour séparer un gaz inerte du premier flux d'air sortant de l'échangeur de chaleur d'inertage de réservoir de carburant ;
dans lequel
l'échangeur de chaleur d'inertage de réservoir de carburant est couplé de manière fonctionnelle au système de climatisation (40), **caractérisé en ce que** le premier flux d'air n'est pas climatisé par le système de climatisation avant d'atteindre l'échangeur de chaleur d'inertage de réservoir de carburant.

2. Aéronef selon la revendication 1, dans lequel une configuration de l'échangeur de chaleur d'inertage de réservoir de carburant est choisie pour atteindre une température souhaitée du premier flux d'air associé au fonctionnement de l'au moins un module de séparation d'air.

3. Aéronef selon la revendication 2, dans lequel la température souhaitée du premier flux d'air est comprise entre environ 150 °F (65,6 °C) et environ 250 °F (121,1 °C).

4. Aéronef selon une quelconque revendication précédente, dans lequel l'échangeur de chaleur d'inertage de réservoir de carburant est situé à distance d'un circuit d'air dynamique, et/ou dans lequel l'échangeur de chaleur d'inertage de réservoir de carburant est fonctionnellement couplé à un système de commande de la pression de cabine, et éventuellement dans lequel le système de commande de la pression de cabine comprend :
un conduit (56) pour recevoir l'air de décharge de cabine provenant d'une cabine (52) ; et
une soupape de décharge (54) mobile pour commander un flux de l'air de décharge de cabine évacué du conduit, et dans lequel l'échangeur de chaleur d'inertage de réservoir de carburant est situé entre la cabine et la soupape de décharge.

5. Aéronef selon une quelconque revendication précédente, dans lequel le second flux d'air sortant de l'échangeur de chaleur d'inertage de réservoir de carburant est évacué vers l'extérieur.

6. Aéronef selon une quelconque revendication précédente, dans lequel l'échangeur de chaleur d'inertage de réservoir de carburant est agencé entre une cabine et le système de climatisation (40) par rapport au flux d'air de refroidissement, et éventuellement dans lequel le système de climatisation comprend une machine à cycle à air et le second flux d'air sortant de l'échangeur de chaleur d'inertage de réservoir de carburant est fourni à la machine à cycle à air.

7. Aéronef selon la revendication 6, dans lequel de l'énergie est extraite du second flux d'air fourni à la machine à cycle à air.

8. Aéronef selon la revendication 6 ou 7, dans lequel la machine à cycle à air comprend en outre une turbine et le flux d'air de refroidissement est fourni à la turbine.

9. Aéronef selon une quelconque revendication précédente, dans lequel le premier flux est de l'air de purge prélevé sur au moins l'un d'un moteur et d'un groupe auxiliaire de puissance (26) .

10. Procédé d'inertage d'un réservoir d'essence d'un aéronef comprenant :
la fourniture d'un premier flux d'air ayant une première température à un échangeur de chaleur d'inertage de réservoir de carburant couplé de manière fonctionnelle à un système de climatisation, le premier flux d'air n'ayant pas été climatisé par le système de climatisation ;
la fourniture d'un second flux d'air comprenant de l'air de décharge de cabine ayant une seconde température à l'échangeur de chaleur d'inertage de réservoir de carburant, la première température étant supérieure à la seconde température ;
le transfert de chaleur du premier flux d'air au second flux d'air à l'intérieur de l'échangeur de chaleur d'inertage de réservoir de carburant ; et
la séparation dans un module de séparation d'air d'un gaz inerte provenant du premier flux d'air sortant de l'échangeur de chaleur d'inertage de réservoir de carburant.

11. Procédé selon la revendication 10, dans lequel la température du premier flux d'air sortant de l'échangeur de chaleur d'inertage de réservoir de carburant est comprise entre environ 150 °F (65,6 °C) et environ 250 °F (121,1 °C).

12. Procédé selon la revendication 10 ou 11, comprenant en outre l'extraction d'énergie du second flux d'air sortant de l'échangeur de chaleur d'inertage de réservoir de carburant.

13. Procédé selon la revendication 12, dans lequel l'énergie est extraite du second flux d'air au niveau d'une machine à cycle d'air d'un système de climatisation.

14. Procédé selon l'une quelconque des revendications 10 à 13, dans lequel le premier flux d'air est de l'air de purge prélevé d'au moins l'un parmi un moteur et une unité auxiliaire de puissance.
